# EUROPEAN PATENT APPLICATION

(11) **EP 2 614 701 A1**
(43) Date of publication of application: **17.07.2013**
(21) Application number: 13150939.0
(22) Date of filing: 11.01.2013
(51) Int. Cl.: A01D 78/00

(54) **Rake for the collection of agricultural products and process for collection**

(30) Priority: 11.01.2012 IT UD20120005
(71) Applicant: Tonutti Wolagri SpA con Socio Unico, 33047 Remanzacco (UD) (IT)
(72) Inventor: Tonutti, Carletto, 33019 Tricesimo (UD) (IT)
(74) Representative: Petraz, Gilberto Luigi

(57) **Abstract**

Side-delivery rake comprising a frame (11) provided with at least a longitudinal support arm (13) to which a plurality of finger wheels (20) are associated, suitable to assume at least a first operating condition of work in which they carry out a gathering action, and a second operating condition of transport in which they are in a raised condition with respect to the ground. The side-delivery rake comprises a first group (25) of said finger wheels (20) and at least a second group (26) of said finger wheels (20) disposed consecutive and substantially aligned with respect to said first group (25), which are configured to assume, independently one from the other, said first and said second operating condition.

## Description

### FIELD OF THE INVENTION

The present invention concerns a side-delivery rake for gathering hay, forage, straw or other agricultural products, into one or more swathes. In particular, the side-delivery rake according to the present invention comprises a frame on which a plurality of finger wheels are mounted rotatable, normally on one side and the other, which exert an elastic thrust on the hay to gather it. The side-delivery rake according to the present invention allows to vary the disposition of the finger wheels with respect to the ground, between a lowered operating position, in substantial contact with the ground, and an inactive or transport position raised from the ground.

The present invention also concerns the corresponding method for gathering agricultural products.

### BACKGROUND OF THE INVENTION

Side-delivery rakes are known, for gathering into swathes hay, forage, straw or in general agricultural products.

Side-delivery rakes are also known, which comprise a carted frame that is connected to a tractor and to which a plurality of finger wheels are associated.

The carted frame is provided with one or two longitudinal arms that, in the working condition, are disposed transverse to the longitudinal extension of the frame so as to carry out the gathering operation. Examples of such machines can be found for example in documents NL 6.700.059 A, EP 290.059 A2, NL 99 451 C and NL 99 255 C.

In the case of two longitudinal arms, disposed on the two sides of the side-delivery rake, they are positioned during the working condition converging with respect to each other in a V-shaped configuration with respect to the longitudinal median axis of the side-delivery rake, defined substantially by the median axis of the carted frame, so as to convey the product into a single swath.

Each of the finger wheels is mounted on a support element, for example a suitably shaped tubular element, which in turn is pivoted to the corresponding longitudinal arm.

The support elements of each of the finger wheels, associated to the same longitudinal arm, are in turn connected to suitable actuation means that provide to take simultaneously all the finger wheels mounted on one of the longitudinal arms, for each side of the side-delivery rake, into a first and a second operating condition, respectively in contact and raised with respect to the ground.

The known actuation means, associated to each longitudinal arm, consist of a longitudinal bar mounted parallel and sliding with respect to the arm.

The support elements of the finger wheels are solidly connected with the corresponding longitudinal bar so that a translation of the latter allows to take the finger wheels into the first and second operating conditions.

The translation of the longitudinal bar is effected generally by a simple-effect oil-dynamic actuator which, when actuated, causes the simultaneous raising of all the finger wheels. When the actuator is de-activated, the finger wheels, due to their own weight, move to the first operating condition in contact with the ground.

Each of the longitudinal arms can be suitable to support nine, ten or more finger wheels. Consequently, the side-delivery rake has a very great overall length which can reach and even exceed 10 meters.

One disadvantage of known side-delivery rakes is that, given their considerable length, during the gathering operations and in particular when the tractor is about to leave the field, it is not always possible to leave the finger wheels in contact with the ground to complete the formation of the swath. This means that the side-delivery rake leaves the scattered product on the ground before the swath is completely formed.

This entails an increase in the gathering times and in some cases the finger wheels may even be damaged.

One purpose of the present invention is to obtain a side-delivery rake that allows to gather the agricultural products simply, quickly and efficiently.

Another purpose of the present invention is to obtain a side-delivery rake that is simple and economical to produce.

Another purpose is to perfect a method for gathering agricultural products that allows to effect the gathering operations efficiently and quickly.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a side-delivery rake according to the present invention is configured to gather into swathes agricultural products, such as hay, forage, straw and suchlike.

In particular, the side-delivery rake comprises a frame provided with at least a longitudinal support arm to which a plurality of finger wheels are associated, suitable to assume at least a first working condition in which they carry out a gathering action, and a second transport condition in which they are raised with respect to the ground.

The present invention can be applied both to side-delivery rakes provided with a single longitudinal support arm and also to side-delivery rakes provided with two longitudinal support arms. In the latter case, the longitudinal support arms can be positioned parallel to each other, on the two sides of the longitudinal axis of the side-delivery rake, defined substantially by the center line of the frame, and in a configuration of minimum bulk in the transport condition, or converging with respect to each other in the gathering condition in order to gather the agricultural products into swathes.

According to one feature of the present invention, the side-delivery rake comprises a first group of finger wheels and at least a second group of finger wheels, disposed consecutive and substantially aligned with the first group, that is, disposed successively to the first group with respect to the normal direction of travel, and associated to the same longitudinal support arm, and which completes the gathering operation of the products, wherein the first and second group of finger wheels are configured to assume, independently of each other, the above mentioned first and second operating conditions.

In this way, by suitably coordinating the autonomous movement of the first group of finger wheels and the second group of finger wheels, it is possible to perform the gathering operations correctly even near the end of a field.

More specifically, near the end of the field the first group of finger wheels can be raised, at the appropriate time, with respect to the ground, while the second group will continue working, completing the swath that was being formed. This prevents any possible damage to the finger wheels of the first group which, during movement, at the end of the field may meet bumps or irregularities in the ground.

According to another feature, the first and second group are provided respectively with first actuation means and second actuation means, independent from each other and suitable to take the finger wheels to the first and second operating conditions.

According to some forms of embodiment, the first and/or second actuation means may comprise mechanical mechanisms, for example rods, cranks, cams or other similar devices, which provide to move the two groups of finger wheels independently.

In other forms of embodiment, the first and second actuation means are associated to a single common actuation element that provides to move both of them. Both the actuation means are suitably configured, for example with different travels of the above mentioned mechanical mechanisms, or suitable non-operative travels thereof, in order to obtain the independent movement, that is, in temporal sequence, of one group of finger wheels with respect to the other.

According to another feature, the finger wheels are mounted idle on support elements which in turn are pivoted to the support arm of the frame. The support elements are also associated to the first actuation means or respectively the second actuation means.

In one form of embodiment, the first and second actuation means each comprise a longitudinal bar associated slidingly with the support arm and the support elements are solidly associated to each longitudinal bar. In this way, the actuation of the first or respectively the second actuation means determines a simultaneous raising of the finger wheels of the first and second group.

According to a variant of the above form of embodiment, it is possible to provide that the first and/or second actuation means are configured so that the raising of the finger wheels at least of the first of the two groups occurs gradually in the normal direction of travel of the side-delivery rake. In other words, it can be provided that the finger wheels, for example of the first group, that are disposed further upstream, are raised before the finger wheels belonging to the same group and disposed further downstream.

According to another form of embodiment of the present invention, the first and second actuation means each comprise at least an actuator associated to the support arm and the longitudinal bar, to provide the independent drive of the first and second group.

According to another feature, the actuators can be the oil-dynamic, pneumatic or electric type. It is also possible to provide that, in the case of oil-dynamic or pneumatic actuators, they are simple or double effect type, so that it is possible to suitably control how the finger wheels pass from the first to the second operating condition.

According to another feature of the present invention, at least one adjustment member is associated to at least one of the actuators of the first and second actuation means, and is configured to determine the actuation conditions and modes of the actuators.

The present invention also concerns a method for gathering agricultural products with a side-delivery rake as described above.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of a first configuration of a side-delivery rake according to the present invention;
- fig. 2 is a lateral view of a second configuration of a side-delivery rake according to the present invention, in a first operating condition;
- fig. 3 is a lateral view of the side-delivery rake in fig. 2, in a second operating configuration;
- fig. 4 is a lateral view of the side-delivery rake in fig. 2, in a third operating configuration;
- fig. 5 is a perspective view of a first detail of the side-delivery rake in fig. 1;
- fig. 6 is a perspective view of a second detail of the side-delivery rake in fig. 1;
- fig. 7 is a perspective view of a third detail of the side-delivery rake in fig. 1;
- fig. 8 is a front view of a detail of fig. 3;
- fig. 9 is a schematic view of some components of the side-delivery rake in fig. 1.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

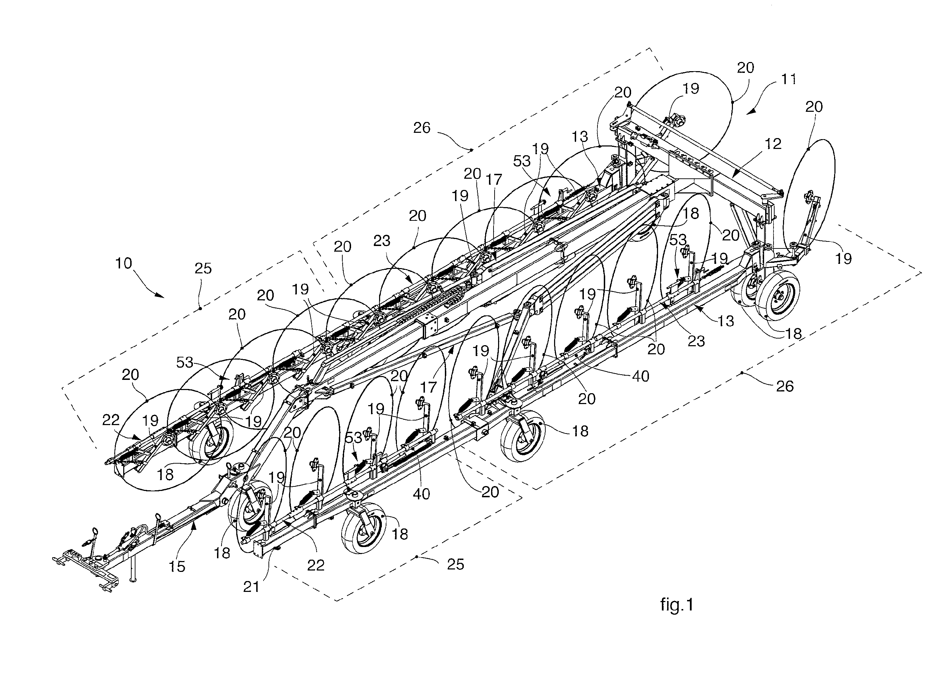

With reference to fig. 1, a side-delivery rake according to the present invention is indicated in its entirety by the reference number 10, and comprises a carted frame 11 provided with a central body 12 and two longitudinal support arms 13 associated to the sides of the central body 12.

A drawing shaft 15 is associated to the central body 12, near its center line, for connection to a tractor, which drawing shaft 15 defines substantially the longitudinal axis of the side-delivery rake 10.

Opening/closing means 17, of a substantially known type and therefore not described in detail here, are associated to the drawing shaft 15 and to each of the two longitudinal support arms 13.

The opening/closing means 17 are configured to dispose the longitudinal support arms 13 either parallel to each other, in the transport condition of the side-delivery rake, or convergent, in the direction opposite to the normal direction of movement, in the working condition.

Wheels 18, which allow to move the carted frame 11, are associated to the central body 12 of the carted frame 11, to the longitudinal support arms 13 and to the end of the drawing shaft 15.

A plurality of finger wheels 20 are associated to each of the longitudinal support arms 13 by means of respective support elements 19.

On the lower part of the longitudinal support arms 13 pivoting elements 21 (figs. 1, 5 and 8) are solidly associated, in which the support elements 19 of the finger wheels 20 are pivoted.

The support elements 19, rotating around the pivoting elements 21, take the finger wheels 20 to a first operating condition, in, contact with the ground so as to perform the gathering operations, and a second operating condition, raised with respect to the ground, for example during the transport steps.

Each longitudinal support arm 13 is provided with first actuation means 22 (figs. 1 - 6 and 8) and second actuation means 23 configured to take respectively a first group 25 and a second group 26 of the finger wheels 20, associated to one of the longitudinal support arms 13, into the first and second operating conditions.

Although in the description and claims we shall refer to groups 25 and 26 of finger wheels 20, it is understood that the groups 25 and 26 can also comprise one finger wheel 20 only, independently mobile from the finger wheel 20 adjacent and consecutive to it.

With reference to fig. 1, ten finger wheels 20 are associated to each longitudinal support arm 13.

The first actuation means 22 are suitable to move together the first four finger wheels 20 of the same longitudinal support arm 13 that are disposed consecutive with respect to each other starting from the front part of the side-delivery rake 10, and that define the first group 25.

The second actuation means 23 are suitable instead to move the other six finger wheels 20 associated to the same longitudinal support arm 13 disposed consecutive with respect to each other toward the rear part of the side-delivery rake 10 and that define the second group 26.

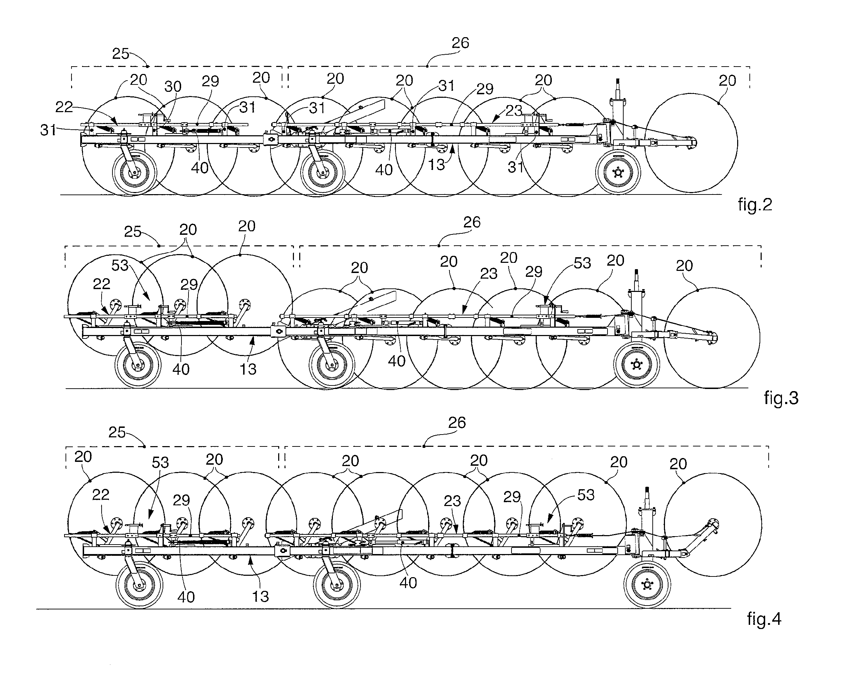

On the contrary, in the form of embodiment shown in figs. 2-4, nine finger wheels 20 are associated to each longitudinal support arm 13; in particular, the first group 25 comprises three finger wheels 20 while the second group 26 comprises six finger wheels 20.

It is quite clear that in other forms of embodiment the number of finger wheels 20 associated to each longitudinal support arm 13 can be greater or smaller than nine or ten.

It is also clear that the number of finger wheels 20 associated to the first group 25 can be different from those associated to the second group 26.

In other forms of embodiment a number of groups greater than two may be provided, for example providing that one, two or more finger wheels 20 are associated to each group.

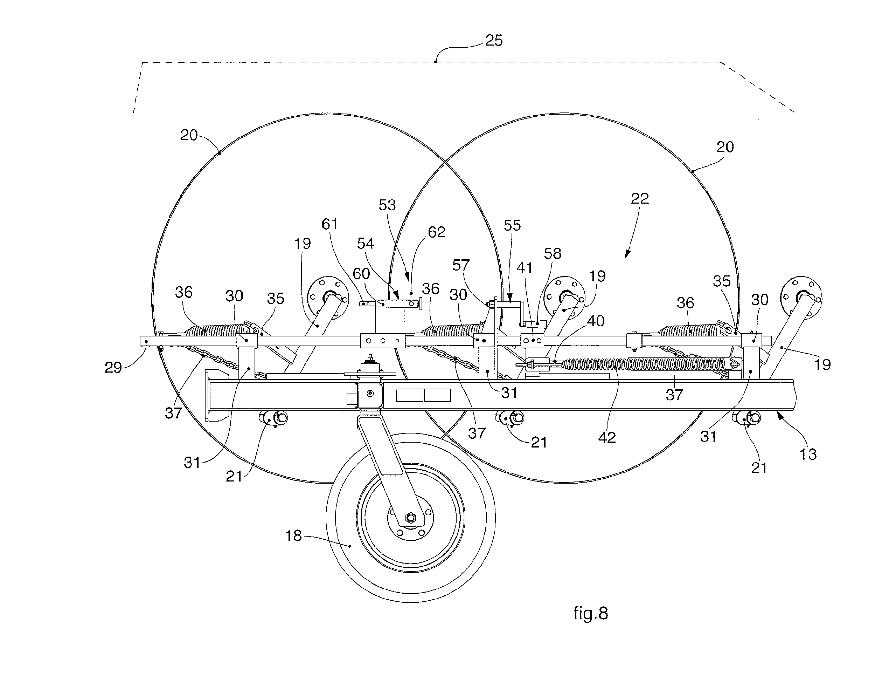

Both the first 22 and the second actuation means 23 comprise a longitudinal bar 29 (fig. 8) mounted sliding through a plurality of tubes 30 solidly associated by means of a plurality of brackets 31 to the longitudinal support arms 13.

Each support element 19 is provided with a blade 35 transverse to which elastic elements 36 are associated, in turn associated to the longitudinal bar 29.

The elastic elements 36, in this case a traction spring, are suitable to obtain an effective suspension action of each finger wheel 20 on the ground during the gathering operations.

A chain 37 is also associated to each support element 19 and to the longitudinal bar 29, and limits the range of the oscillations allowed by the elastic element 35 and provides to raise the finger wheels 20.

Both the first 22 and the second actuation means 23 of each of the groups also comprise an actuator 40 that is associated at one end to one of the brackets 31, and at the other end to the longitudinal bar 29 by means of a tubular element 41 solidly attached to the longitudinal bar 29.

In this case, the actuator 40 is the simple-effect type and a return spring 42 is associated to it, at least with regard to the first group 25 of finger wheels 20.

More specifically, when the actuator 40 is activated, the finger wheels 20 are raised. When it is necessary to take the finger wheels 20 to the working condition, the actuator 40 is de-activated and the return spring 42 promotes the rapid lowering of the finger wheels 20.

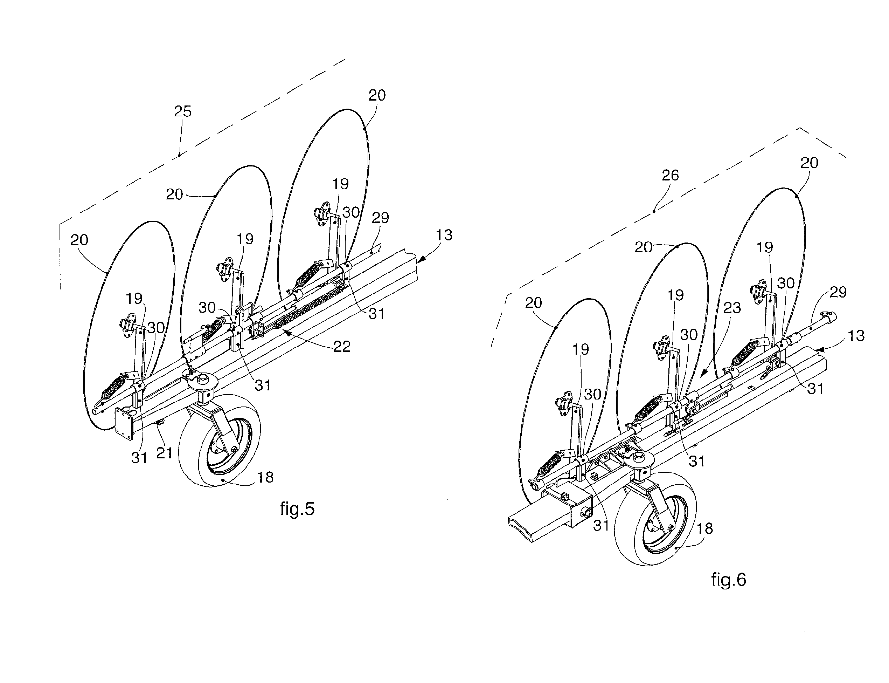

With regard to the second group 26 (fig. 6) of finger wheels 20, the return spring 42 is not associated to the actuator 40, as provided for the first group 25, and the lowering of the finger wheels 20 is obtained only due to the weight of the latter, and of the support elements 19 to which they are associated, also given the greater number of finger wheels 20 provided.

In other forms of embodiment it may be provided that one or the other or both of the first group 25 or the second group 26 are moved by means of a double-effect actuator, or by means of other actuation means of a substantially known type.

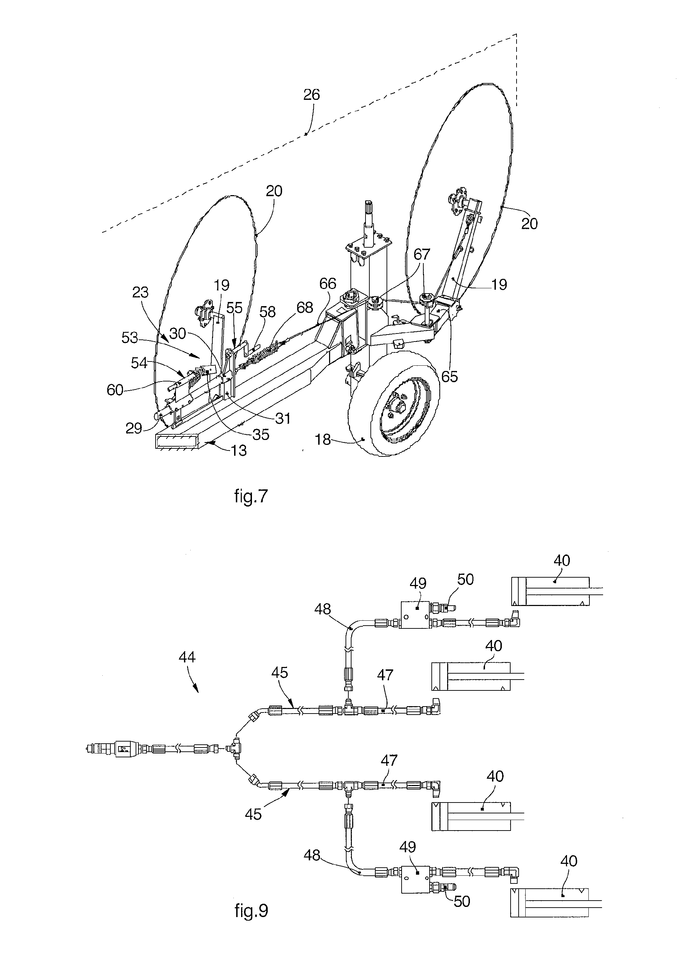

In this case, the actuators 40 (fig. 9) are the oil-dynamic type and, as we said, the single-effect type.

The actuators 40 are actuated by means of a fluid-dynamic circuit, for example an oil-dynamic circuit 44 provided with two feed branches 45.

Each feed branch 45 is provided to actuate the two actuators 40 of the first 25 and second group 26.

In particular, each feed branch 45 is provided with a first pipe 47 suitable to actuate the actuator 40 of the first group 25 and a second pipe 48 suitable to actuate the actuator 40 of the second group 26.

With regard to the actuator 40 associated to the second group 26, the modes in which the finger wheels 20 pass from the gathering condition to the raised condition are determined by a suitable adjustment member 49, in this case a sequence valve associated to the second tube 48 of each feed branch 45.

The adjustment member 49 may consist of a sequence valve, as said before, a flow adjuster or other similar or comparable member to regulate the flow in the fluid-dynamic circuit.

In particular, the sequence valve 49 is provided with an adjustment element 50 selectively adjustable by the operator to determine the modes of intervention and activation on the actuator 40.

More specifically (fig. 2), in the normal gathering condition, the finger wheels 20 of the first 25 and second group 26 are in contact with the ground and all the actuators 40 are in their retracted condition.

When the swath is in the process of being finished, the operator commands the finger wheels 20 to be raised by activating a pump (not shown in the drawings) that delivers pressurized oil into the oil-dynamic circuit 44.

In this step, the actuators 40 of the first actuation means 22 move almost instantaneously to the raised condition from the ground, while the actuators 40 of the second actuation means 23, also commanded by the sequence valve 49, delay their raising.

The sequence valve 49, or possibly other adjustment members, is therefore provided to delay or selectively slow down the raising of the finger wheels 20 associated to it.

In this way, the finger wheels 20 of the second group 26 continue their gathering operation and complete the formation of the swath. With this solution it is therefore possible to prevent the side-delivery rake 10 from leaving on the ground the product that is still being gathered, in that case requiring the operator to complete such operation, either manually or following appropriate maneuvers of the side-delivery rake 10.

Both the first 22 and the second actuation means 23 also comprise end-of-travel means 53 (fig. 8) provided with an abutment element 54 solidly associated to the longitudinal bar 29, and a contrast element 55 which is solidly associated to the longitudinal support arm 13 in correspondence with one of the brackets 31.

When the finger wheels 20 are in contact with the ground, the abutment element 54 is disposed in contact with the fixed contrast element 55, determining the limit position of the finger wheels 20 in the gathering condition.

The contrast element 55 is also configured to regulate the entity of the pressure exerted by the finger wheels 20. More specifically, each contrast element 55 is provided with an adjustment screw 57 which is screwed in correspondence with the bracket 31.

The adjustment screw 57 is associated to a crank 58 able to be actuated by the operator to move the adjustment screw 57 closer to or away from the abutment element 54.

In this case, the abutment element 54 comprises a tubular body 60 solidly associated by means of a bracket to the longitudinal bar 29, and a pin 61 disposed sliding in the tubular body 60 and suitable to assume a first operating position and a second operating position.

In the first operating position, the pin 61 is retracted inside the tubular body 60 and, cooperating with the contrast element 55, determines the position assumed by the finger wheels 20.

In the second operating position, the pin 61 is disposed protruding toward the contrast element 55 to contact the adjustment screw 57.

An attachment peg 62 is provided to keep the pin 61 respectively in the first or second operating position.

In the second operating position of the pin 61, the finger wheels 20 are in the maximum raised condition from the ground also determined by the length of the chain 37. In this position, the pin 61 prevents the finger wheels 20 from being lowered by blocking the translation of the longitudinal bar 29.

In this way a safety system is defined which prevents the finger wheels 20 from being lowered toward the ground, for example when traveling on the road.

The last finger wheel 20 of the second group 26 (fig. 7) is associated to the carted frame 11 in a condition protruding toward the rear part thereof.

More specifically, the support element 19 that supports the last finger wheel 20 is pivoted in correspondence with a cantilevered element 65 welded to the carted frame 11.

The movement of the last finger wheel 20 is determined by a cable 66 that is attached at one end to the longitudinal bar 29 of the second group 26, while at the other end it is attached to the support element 19. The translation of the longitudinal bar 29 to raise/lower the finger wheels 20 of the second group 26 also causes the simultaneous raising/lowering of the last finger wheel 20.

Suitable return members 67 are associated to the carted frame 11 and the cantilevered element 65 to guide the cable 66.

Between the longitudinal bar 29 and the cable 66 there is a traction spring 68 interposed, which allows to obtain an effective action of suspending the last finger wheel 20 over the ground during the gathering operations.

The side-delivery rake 10 according to the present invention functions as follows.

During transport, all the finger wheels 20 of both the first 25 and the second group 26 are in the raised position (fig. 4). In this position the actuators 40 are all in their maximum extension position.

In the working condition, all the finger wheels 20 are put in contact with the ground so as to perform the gathering operations (fig. 2). The adjustment of the pressure exerted by the finger wheels 20 on the ground is set by the end-of-travel means 53.

Toward the end of the gathering operations, for example when the end of the field is approaching, the operator activates the oil-dynamic circuit 44 in order to raise the finger wheels 20.

When the oil-dynamic circuit is activated, the finger wheels 20 of the first group 25, that is, those disposed in the front part of the side-delivery rake 10, are raised by actuating the respective actuator 40.

In this step, the sequence valve 49 delays the raising of the finger wheels 20 of the second group 26 with respect to those of the first group 25.

In this way, the finger wheels 20 of the second group 26 can continue the gathering operations while those of the first group 25, being raised, are not damaged or do not carry out any involuntary gathering action.

By suitably calibrating the sequence valve 49 it is therefore possible to determine the time range between the raising of the finger wheels 20 of the first group 25 with respect to the raising of the second group 26.

It is clear that modifications and/or additions of parts may be made to the side-delivery rake 10 as described heretofore, without departing from the field and scope of the present invention.

For example, even if the description describes one or two longitudinal support arms 13, in this case one for each side of the side-delivery rake 10, it is understood that it is totally equivalent, and therefore comes within the field of protection of the present invention, that for each side of the side-delivery rake there is not a single longitudinal support arm 13 which supports all the finger wheels 20 located on one side of the machine, but that there are two or more longitudinal support arms 13 each supporting two or more finger wheels 20, each of which can be raised and lowered independently of the adjacent finger wheel 20 mounted on the same arm 13.

It is also clear that, although the present invention has been described with reference to some specific examples, a person of skill in the art shall certainly be able to achieve many other equivalent forms of side-delivery rake, having the characteristics as set forth in the claims and hence all coming within the field of protection defined thereby.

## Claims

1. Side-delivery rake comprising a frame (11) having a central body (12), a drawing shaft (15) and at least a longitudinal support arm (13) associated to said central body (12), a plurality of finger wheels (20) being mounted on said longitudinal support arm (13) and being suitable to assume at least a first operating condition of work in which they carry out a gathering action, and a second operating condition of transport in which they are in a raised position with respect to the ground, **characterized in that** it comprises a first group (25) of said finger wheels (20) and at least a second group (26) of said finger wheels (20) disposed on the same longitudinal support arm (13) and consecutive and substantially aligned with respect to said first group (25), **and in that** said first group (25) and said second group (26) of finger wheels are configured to assume, independently one from the other, said first and said second operating condition.

2. Side-delivery rake as in claim 1, **characterized in that** said first group (25) and said second group (26) are respectively provided with first actuation means (22) and second actuation means (23) independent of each other and suitable to bring said finger wheels (20) into said first and said second operating condition.

3. Side-delivery rake as in claim 2, **characterized in that** said finger wheels (20) are mounted idle on support elements (19) which, in turn, are pivoted to said longitudinal support arm (13), said support elements (19) being associated to said first actuation means (22), or respectively to said second actuation means (23).

4. Side-delivery rake as in claim 3, **characterized in that** said first (22) and said second actuation means (23) each comprise a longitudinal bar (29) associated in a sliding manner to said longitudinal support arm (13), **and in that** said support elements (19) are solidly associated to said longitudinal bar (29).

5. Side-delivery rake as in claim 4, **characterized in that** said first (22) and said second actuation means (23) each comprise at least an actuator (40) associated to said longitudinal support arm (13) and to said longitudinal bar (29).

6. Side-delivery rake as in claim 5, **characterized in that** at least an adjustment member (49), configured to determine the actuation conditions of said actuators (40), is associated to at least one of said actuators (40) of said first (22) and/or second actuation means (23).

7. Side-delivery rake as in claim 5 or 6, **characterized in that** it comprises a fluid-dynamic circuit (44) provided with at least a first pipe (47) and with a second pipe (48) suitable to feed said actuators (40) of said first (22) and respectively second (23) actuation means.

8. Side-delivery rake as in claim 6 and 7, **characterized in that** said adjustment member comprises a sequence valve (49) or a flow adjuster associated to at least one of either said first (47) and/or said second (48) pipes.

9. Side-delivery rake as in any claim from 2 to 8, **characterized in that** end-of travel means (53), configured to determine a limit position assumed by said finger wheels (20) in said first operating condition, are associated to said first actuation means (22) and to said second actuation means (23).

10. Method to gather agricultural products by means of a side-delivery rake comprising a frame (11) comprising a central body (12), a drawing shaft (15) and at least a longitudinal support arm (13) associated to said central body (12), a plurality of finger wheels (20) being mounted on said longitudinal support arm (13), said method providing at least a first gathering step in which said finger wheels (20) gather said products in swathes, and a second transport step in which said finger wheels (20) are taken to a raised condition with respect to the ground, **characterized in that** a first group (25) of said finger wheels (20) passes from said first step to said second step, or vice versa, independently of at least a second group (26) of said finger wheels (20), disposed consecutive and substantially aligned with respect to said first group (25).

11. Method as in claim 10, **characterized in that** said first group (25) of finger wheels (20) is disposed upstream of said second group (26) of finger wheels (20) with respect to the normal direction of movement, **and in that** during the passage from said first step to said second step, the finger wheels (20) of the first group (25) are raised before the finger wheels (20) of the second group (26).
